Europäisches Patentamt

European Patent Office

Office européen des brevets

(19)

(11) Veröffentlichungsnummer: **0 023 583**
**B1**

(12) **EUROPÄISCHE PATENTSCHRIFT**

(45) Veröffentlichungstag der Patentschrift:
17.11.82

(21) Anmeldenummer: 80103838.1

(22) Anmeldetag: 05.07.80

(51) Int. Cl.³: **D 02 H 13/08**, G 01 L 5/10,
D 02 H 13/26

(54) Verfahren und Vorrichtung zum Erkennen von Fadenzugkraftunterschieden.

(30) Priorität: 03.08.79 DE 2931570
13.06.80 DE 3022323

(43) Veröffentlichungstag der Anmeldung:
11.02.81 Patentblatt 81/6

(45) Bekanntmachung des Hinweises auf die Patenterteilung:
17.11.82 Patentblatt 82/46

(84) Benannte Vertragsstaaten:
AT BE CH FR GB IT LI NL

(56) Entgegenhaltungen:
DE-A-2 038 198
DE-A-2 519 653
US-A-3 869 770

(73) Patentinhaber: Akzo GmbH,
Postfach 10 01 49 Kasinostrasse 19-23,
D-5600 Wuppertal-1 (DE)

(72) Erfinder: â Brassard, Hans-Joachim, Dr. Dipl.-Chem,
Haagweiher 40, D-5138 Heinsberg (DE)
Erfinder: Kloss, Robert, Dr.,Dipl.-Phys,
Boos-Fremery-Strasse 61, D-5138 Heinsberg 1 (DE)
Erfinder: Ketzler, Paul, Meisenweg 11,
D-5138 Heinsberg 1 (DE)
Erfinder: Wolz, Johannes, Waldfeuchter-Strasse 116,
D-5138 Heinsberg (DE)

Verfahren und Vorrichtung zum Erkennen von Fadenzugkraftunterschieden

Die Erfindung betrifft ein Verfahren zum Erkennen von Fadenzugkraftunterschieden in einer geordneten Fadenschar an Textilmaschinen, insbesondere Zettel- oder Schärmaschinen, wobei die Einzelfäden im Meßbereich gleichen Abstand voneinander aufweisen, und eine Vorrichtung zur Durchführung dieses Verfahrens.

Es ist bekannt, daß es trotz aller Anstrengungen, Vorrichtungen zu schaffen, durch welche die Fadenzugkräfte der einzelnen Fäden einer Fadenschar gleichmäßig und untereinander gleich groß gehalten werden können, nicht gelungen ist, solche Fäden in der Fadenschar zu vermeiden, welche gegenüber den anderen Fäden der Fadenschar zu geringe bzw. zu hohe Fadenzugkraft aufweisen. Derartige Fäden werden dann später in den angefärbten Wirk- oder Webwaren sichtbar. Es ist daher wichtig, frühzeitig, möglichst schon vor dem Aufwickeln der Fadenschar, zu erkennen, wann einzelne Fäden aus dem allgemeinen Niveau der Fadenzugkräfte ausscheren.

Einrichtungen zum Messen von Fadenzugkräften sind bekannt: In der DE-OS 2 519 653 ist eine Vorrichtung beschrieben, bei der die Überwachungseinrichtung aus einer auf dem Faden sitzenden Lamelle besteht. Bei höherer Fadenzugkraft eines Fadens gegenüber dem Niveau der Fadenzugkräfte der allgemeinen Fadenschar hängt diese Lamelle höher als die anderen Lamellen, bei niedrigerer Fadenzugkraft tiefer.

In der DE-OS 2 038 198 wird eine Vorrichtung beschrieben, bei der eine Rolle mit Federkraft auf den Faden gedrückt und die Lage der Rolle, die auf einem Hebelsystem drehbar gelagert ist, gemessen und angezeigt wird.

Beide Einrichtungen haben den Nachteil, daß für jeden einzelnen Faden eine eigene Vorrichtung zur Messung der Fadenzugkraft benötigt wird. Außerdem muß jeder Faden einzeln in die Vorrichtung eingefädelt bzw. eingelegt werden.

Technische Aufgabe der Erfindung soll deshalb die Beseitigung dieser Nachteile durch ein Verfahren und eine geeignete Vorrichtung zur Durchführung des Verfahrens, womit das Fadenzugkraftniveau einer Fadenschar in Textilmaschinen überwacht, frühzeitig eine Erhöhung bzw. eine Erniedrigung der Fadenzugkraft einzelner Fäden der Fadenschar erkannt und/oder durch Vorgabe der Grenzen des Fadenzugkraftniveaus rechtzeitig eingegriffen werden kann, sein.

Erfindungsgemäß wird die Aufgabe durch ein Verfahren der eingangs beschriebenen Art gelöst, welches sich dadurch auszeichnet, daß die Fadenschar insgesamt unter für alle Einzelfäden gleichen Bedingungen, beispielsweise mittels für die Fäden der Fadenschar gemeinsamen Fadenumlenkstangen, aus ihrer allgemeinen Ebene in eine neue Ebene von in Laufrichtung durch die Meßstrecke begrenzter Länge ausgelenkt und nach dieser Meßstrecke wieder zurückgeführt wird, und daß die einzelnen Fäden in festgelegter Reihenfolge mit vorbestimmten Kraftverlauf im Bereich der Meßstrecke aus der Ebene ausgelenkt wird, das Ausmaß der Auslenkung gemessen und/oder registriert und/ oder als Stellgröße für Regel- und/oder Steuervorgänge benutzt wird.

Besonders vorteilhaft wird das Verfahren zum Erkennen von Fadenzugkraftunterschieden dadurch gekennzeichnet, daß zyklisch jeder einzelne Faden nacheinander im Bereich der Meßstrecke aus der Ebene ausgelenkt wird.

Bei einer bevorzugten Weiterbildung des erfindungsgemäßen Verfahrens werden bis zu 10 Fäden pro Sekunde im Bereich der Meßstrecke aus der Ebene ausgelenkt. Als besonders vorteilhaft hat sich erwiesen, daß pro Sekunde 5 bis 6 Fäden aus der Ebene der Meßstrecke ausgelenkt werden.

Mit Vorteil wird für die Meßstrecke, innerhalb welcher zyklisch jeder einzelne Faden nacheinander mit vorbestimmter Kraft ausgelenkt wird, eine Länge von 0,5 bis 30 cm gewählt. Je nach Stärke des auszulenkenden Fadens soll die Meßstrecke so gewählt werden, daß möglichst bei jeder Fadenstärke und gleicher Belastung etwa gleiche Auslenkung verursacht wird.

Die Gesamtauslenkung in der Meßstrecke wird bei dem erfindungsgemäßen Verfahren bevorzugt in einen ersten, bezogen auf die Nullage der Messung konstanten und einen zweiten, von der jeweiligen Fadenspannung abhängigen Betrag aufgeteilt. Auf diese Weise kann die Meßsicherheit und die Meßgenauigkeit des Meßverfahrens erhöht werden.

Zur Durchführung des Verfahrens ist erfindungsgemäß eine Vorrichtung mit mindestens zwei Fadenumlenkorganen, die gleichzeitig der Festlegung der Meßstrecke dienen, vorgesehen, welche dadurch gekennzeichnet ist, daß die Fadenumlenkorgane als jeweils allen Fäden der Fadenschar gemeinsame Fadenumlenkstangen (4, 5) ausgebildet sind, wobei innerhalb der Meßstrecke ein Riet angeordnet ist, daß ein quer zur Fadenschar verfahrbarer Meßwagen und in diesem ein längs einer im wesentlichen senkrecht oder annähernd senkrecht zur Fadenscharebene der Meßstrecke verlaufenden Linie beweglicher, mittels einer Feder oder einer anderen Kraft belasteter Taststift angeordnet ist, dessen Position durch eine an sich bekannte Meßeinrichtung erfaßbar ist, und der Meßwagen über flexible Kabel mit den dazugehörenden Schalt-, Registrier- und Versorgungseinrichtungen verbunden ist.

Eine weitere vorteilhafte Ausführung der Vorrichtung ist dadurch gekennzeichnet, daß der Meßwagen auf Schienen fährt, welche parallel zur Ebene der Meßstrecke und senkrecht zur Laufrichtung der Fadenschar angeordnet sind.

Als besonders vorteilhaft hat sich eine Vorrichtung der o. a. Art mit mindestens drei Fadenumlenkstangen erwiesen, bei welcher zwei benachbarte Fadenumlenkstangen gleichzeitig der Festlegung der Meßstrecke dienen, und bei welcher unter dem Meßwagen eine mit dem Boden des Meßwagens verbundene, sich parallel zu dessen Schiene(n) erstreckende, außer dem jeweils zu messenden Faden jeweils mehrere weitere Fäden davor und dahinter erfassende Gleitkufe zwischen den zwischen dem Riet und der in Fadenlaufrichtung nächstgelegenen Fadenumlenkstange laufenden Taststift und der Fadenumlenkstange angeordnet ist.

Bevorzugt werden Vorrichtungen, welche dadurch gekennzeichnet sind, daß die Gleitkufe die Form einer doppelseitigen Schlittenkufe hat, wobei die beiden Enden der Gleitkufe zum Meßwagen hin gebogen sind und der mittlere Teil auf einer Länge von mindestens dem Dreifachen des Taststiftdurchmessers parallel zur Führungsstange verläuft.

Durch die Gleitkufe wird erreicht, daß die Ausgangslage der Fäden bezogen auf die Nullage des Taststiftes in der gesamten Fadenschar gleich ist. Auf diese Weise ergibt sich eine kleinere Eintauchtiefe für den Taststift. Bei geringerer Eintauchtiefe des Taststiftes ist es ohne weiteres möglich, den Taststiftdurchmesser zu verringern und, als Folge davon, die Fadenabstände der einzelnen Fäden untereinander zu verringern und/oder die Meßgenauigkeit zu erhöhen.

Die Kraft, mit welcher der Taststift belastet ist, kann in Ausgestaltung der erfindungsgemäßen Vorrichtung entweder die Schwerkraft oder die mittels Feder, vorzugsweise mittels einer Blattfeder aufgebrachte Kraft sein.

Bei einer bevorzugten Weiterbildung dieser Vorrichtung ist der Meßwagen zum Einlegen der Fadenschar abnehmbar. Dadurch können die Fäden ohne großen Aufwand eingelegt werden, wobei die Vorrichtung zum Erkennen von Fadenzugkraftunterschieden in einer geordneten Fadenschar erst nach Einlegen aller Fäden der Fadenschar auf die Schienen eingesetzt wird.

Mit Vorteil kann erfindungsgemäß die Vorrichtung zum Erkennen von Fadenzugkraftunterschieden dadurch verwendet werden, daß die Schienen, auf denen der Meßwagen fährt, gleichzeitig zwei der mindestens drei Fadenumlenkstangen sind, die auf derselben Seite der Fadenschar angeordnet sind, wobei die Räder des Meßwagens auf der Fadenschar abgewandten Seite aufliegen.

Bei einer besonders bevorzugten Weiterbildung dieser Vorrichtung ist es möglich, daß der Meßwagen mit den gleichzeitig als Fadenumlenkstangen dienenden Schienen zum Einlegen der Fäden quer zur Fadenlaufrichtung ausschwenkbar ist. Dadurch können die Fäden ohne Aufwand, d. h. auf eine Weise, wie wenn die Vorrichtung zum Erkennen von Fadenzugkraftunterschieden nicht vorhanden wäre, eingelegt werden.

Eine weitere vorteilhafte Ausführung wird dadurch erreicht, daß die Spitze des Taststiftes als Kegelstumpf ausgebildet ist. Dadurch wird erreicht, daß der Taststift, welcher bei den bisher beschriebenen Vorrichtungen jeweils vor jedem einzelnen Faden angehoben werden und auf den zu messenden Faden wieder abgesenkt werden muß, in vorbestimmter Ausgangsposition belassen werden kann. Der Faden, der im Bereich der Schräge des Kegelstumpfes der Spitze des Taststiftes beim Querfahren des Wagens mit dem Taststift in Berührung kommt, gleitet beim weiteren Querfahren des Meßwagens bei gleichzeitigem Anheben des Taststiftes unter die Spitze des Taststiftes. Über die Ebene des Kegelstumpfes wird der Taststift für einen kurzen Moment in der Position gehalten, die der Fadenzugkraft des zu messenden Fadens entspricht.

Mit Vorteil ist die Spitze des Taststiftes als abgeplattete Halbkugel ausgebildet. Dadurch wird der Taststift dann, wenn er mit dem Faden in Berührung kommt, zuerst stark beschleunigt angehoben, während die Anhebung des Taststiftes immer weniger beschleunigt wird, je näher der Faden in die Nähe der Abplattung gleitet. Dadurch wird ein Überschwingen des Taststiftes über die Position hinaus, welche der Fadenzugkraft des zu messenden Fadens entspricht, vermieden.

Eine erfindungsgemäße Vorrichtung zum Erkennen von Fadenzugkraftunterschieden ist dadurch ausgezeichnet, daß das Verhältnis von Taststiftdurchmesser zum Fadenabstand zweier benachbarter Fäden der Fadenschar kleiner oder gleich 4 ist. Vorzugsweise wählt man ein Verhältnis von Taststiftdurchmesser zu Fadenabstand zwischen 2 und 4.

Eine besonders bevorzugte Ausführungsform der Vorrichtung zum Erkennen von Fadenzugkraftunterschieden einer geordneten Fadenschar ist dadurch zu erreichen, daß die Meßeinrichtung zum Erfassen der Position des Taststiftes ein induktiver tastloser Wegaufnehmer ist. Das Wirkprinzip von induktiven tastlosen Wegaufnehmern ist beispielsweise in »Hengstenberg, Sturm, Winkler, Messen und Regeln in der Chemischen Technik« zweite Auflage, 1964, Seiten 1048/1049 beschrieben.

Die Erfindung soll nachstehend anhand von Beispielen näher erläutert werden.

Zwei zur Durchführung des Verfahrens geeignete Vorrichtungen werden anhand der beigefügten Zeichnungen näher erläutert:

Es zeigt

Fig. 1 die Prinzipskizze einer Vorrichtung zum Erkennen von Fadenzugkraftunterschieden,

Fig. 2 eine Ausführungsform der Spitze des Taststiftes,

Fig. 3 ein Registrierstreifen als Meßprotokoll für eine mit der erfindungsgemäßen Vorrichtung zum Erkennen von Fadenzugkraftunterschieden erfaßte Fadenschar,

Fig. 4 die Prinzipskizze einer weiteren Vorrichtung zum Erkennen von Fadenzugkraftunterschieden,

Fig. 5 einen Schnitt durch die Gleitkufe der Vorrichtung nach Fig. 4.

Beispiel 1

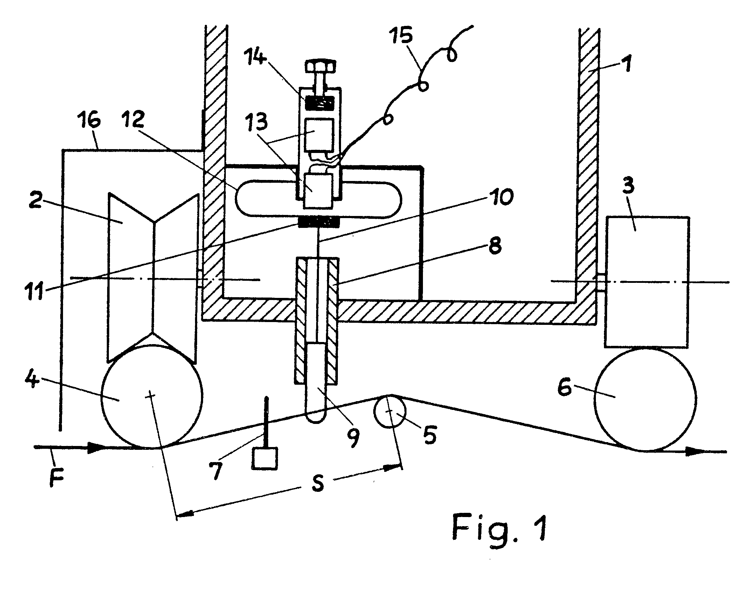

Die in Fig. 1 dargestellte Vorrichtung zum Erkennen von Fadenzugkraftunterschieden besteht aus einem Meßwagen 1, der auf zwei Führungsrollen 2 und einer Antriebsrolle 3, die mit einem nicht dargestellten Antriebsmotor verbunden ist, verfahren werden kann. Die Endbegrenzung des Fahrweges des Meßwagens erfolgt durch bekannte Umschaltorgane wie Endschalter oder Näherungsinitiatoren jeweils am Ende der Fadenschar F, wobei das Umschaltorgan eine Drehrichtungsänderung des Antriebsmotors bewirkt. Da es sich hierbei um ein bekanntes Prinzip handelt, sind die beiden Endschalter nicht in der Zeichnung dargestellt. Die Fadenschar F wird von der Fadenumlenkstange 4 über die Fadenumlenkstange 5 zur Fadenumlenkstange 6 geführt. Gleichzeitig dienen die Fadenumlenkstangen 4 und 6 als Schienen für die Rollen 2 bzw. 3 des Meßwagens 1. Das Riet 7 sorgt außer für gleichmäßigen Abstand der einzelnen Fäden F der Fadenschar voneinander vor allem dafür, daß die einzelnen Fäden durch den Taststift 9 nicht oder nur unwesentlich seitlich verschoben werden können.

Über die Führung 8 wird der Taststift 9 so geführt, daß der Taststift 9 längs einer Linie frei beweglich geführt ist. Über eine Verbindungsstange 10 und ein Metallplättchen 11 ist der Taststift 9 an einer Blattfeder 12 aufgehängt. Die Ausgangsposition des Taststiftes 9 kann durch die Aufhängung der Blattfeder 12 eingestellt werden (in der Figur nicht dargestellt). Der induktive tastlose Wegaufnehmer 13 in Verbindung mit dem einstellbaren Metallplättchen 14 gibt über das flexible Kabel 15 die Impulse an eine feststehende Elektronikeinheit weiter, die ebenfalls nicht dargestellt ist.

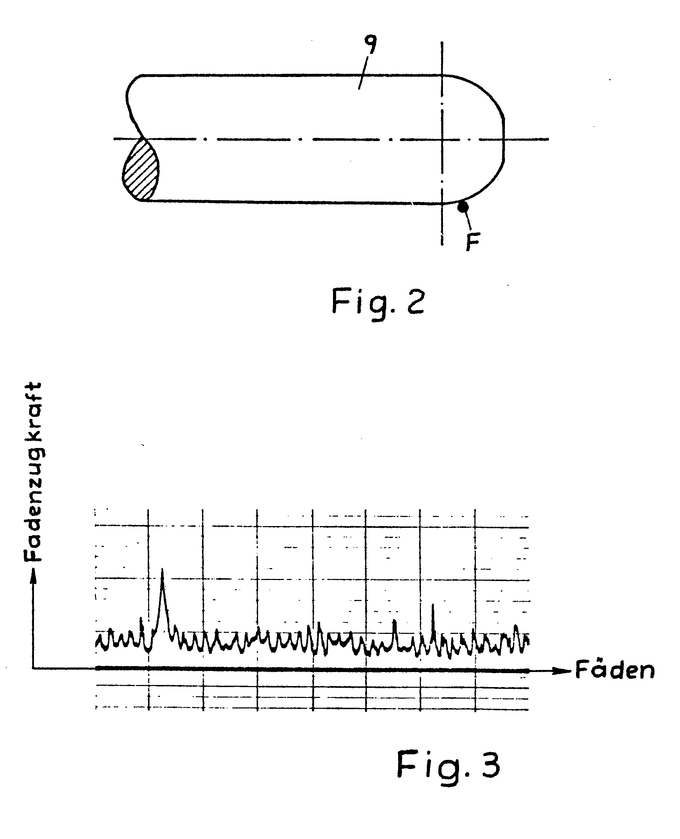

Der Meßwagen 1 fährt mit Hilfe seines Antriebsmotors quer zur Fadenschar F, wobei die Ausgangsposition des Taststiftes 9 so eingestellt ist, daß die Berührung der Taststiftspitze mit dem noch nicht ausgelenkten Faden F im Bereich der Abrundung der Spitze erfolgt. Der Berührungspunkt ist in Fig. 2 dargestellt. Da beim Weiterfahren des Meßwagens 1 infolge des Rietes der Faden F in Fahrtrichtung nicht ausgelenkt werden kann, wird gleichzeitig mit dem Weiterfahren des Meßwagens 1 der Taststift langsam angehoben, was ein Entlanggleiten des Fadens an der Spitze des Taststiftes zur Folge hat. Ist der Taststift 9 so weit angehoben, daß die von der Blattfeder 12 auf den Taststift ausgewirkte Kraft der Kraft entspricht, die der Faden F dem Taststift 9 infolge der diesem Faden eigenen Fadenzugkraft entgegensetzt, gleitet der Faden an der Spitze des Taststiftes vorbei und der Taststift senkt sich wieder ab. Eine Anzeigenadel 16 zeigt an, welcher Faden gerade gemessen wird.

Fig. 2 zeigt die stark vergrößerte Ausführungsform der Taststiftspitze der Vorrichtung zum Erkennen von Fadenzugkraftunterschieden. Die Spitze hat die Form einer abgeplatteten Halbkugel. Der Faden F ist in der Position dargestellt, in welcher der erste Berührungspunkt des noch nicht ausgelenkten Fadens mit der Spitze des Taststiftes 9 in seiner Ausgangsposition sich befindet.

Fig. 3 zeigt einen Registrierstreifen als Meßprotokoll für eine mit der Vorrichtung zum Erkennen von Fadenzugkraftunterschieden erfaßte Fadenschar F. Jeweils eine Spitze in dem auf diesem Registrierstreifen dargestellten Diagramm bedeutet die Erfassung der Fadenzugkraft eines Fadens der Fadenschar. Eine aus dem allgemeinen Niveau hervorragende Spitze bedeutet also erhöhte Fadenzugkraft, eine niedrigere Spitze bedeutet zu geringe Fadenzugkraft gegenüber dem allgemeinen Fadenzugkraftniveau. Da die Fäden durch das Riet voneinander denselben Abstand haben, bedeutet das Ausbleiben einer Spitze im Diagramm, daß an dieser Stelle der Faden F fehlt. Es können also mit dieser Vorrichtung zum Erkennen von Fadenzugkraftunterschieden auch Fadenbrüche festgestellt werden.

Über die nicht dargestellte Elektronikeinheit ist es möglich, bei Erfassung eines Fadens mit zu hoher bzw. zu geringer Fadenzugkraft die Aufwickelmaschine der Fadenschar abzustellen und gleichzeitig den Meßwagen 1 abzustoppen. Dadurch ist es über die Anzeigenadel 16 möglich, den betreffenden Faden festzustellen.

Beispiel 2

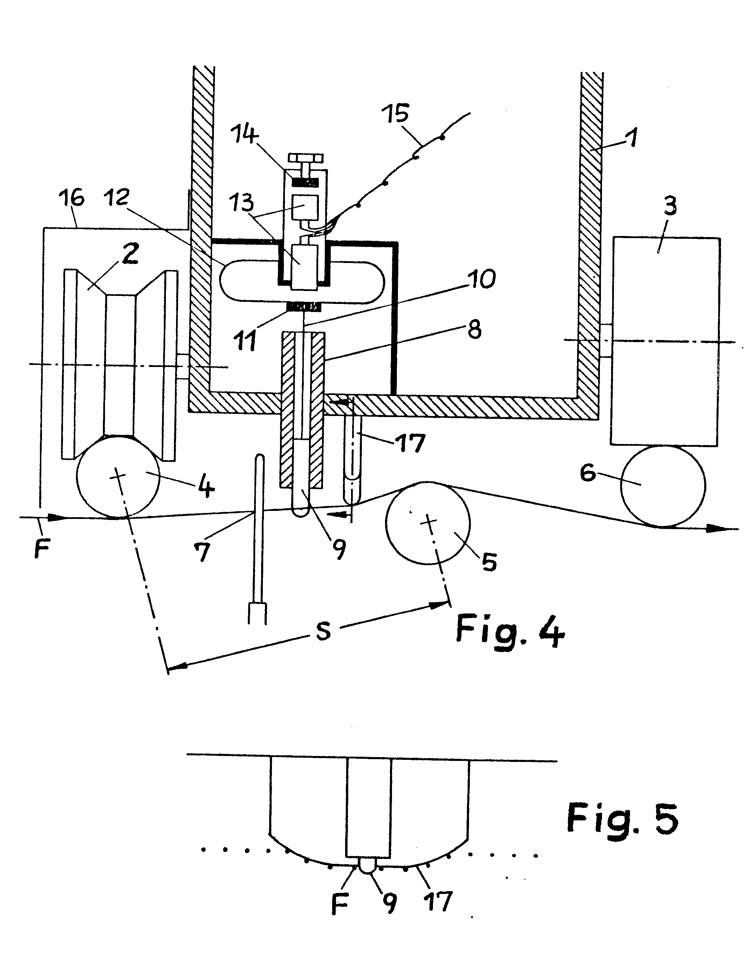

Die in Fig. 4 dargestellte Vorrichtung zum Erkennen von Fadenzugkraftunterschieden besteht aus einem Meßwagen 1, der auf zwei Führungsrollen 2 und einer Antriebsrolle 3, die mit einem nicht dargestellten Antriebsmotor verbunden ist, verfahren werden kann. Die Endbegrenzung des Fahrweges des Meßwagens erfolgt durch an sich bekannte Umschaltorgane wie Endschalter oder Näherungsinitiatoren jeweils am Ende der Fadenschar F, wobei das Umschaltorgan eine Drehrichtungsänderung des Antriebsmotors bewirkt. Da es sich hierbei um ein bekanntes Prinzip handelt, sind die beiden Endschalter nicht in der Zeichnung dargestellt. Die Fadenschar F wird von der Fadenumlenkstange 4 über die Fadenumlenkstange 5 zur Fadenumlenkstange 6 geführt. Gleichzeitig dienen die Fadenumlenkstangen 4 und 6 als Schienen für die Rollen 2 bzw. 3 des Meßwagens 1. Das Riet 7 sorgt außer für gleichmäßigen Abstand der einzelnen Fäden F der Fadenschar voneinander vor allem dafür, daß die einzelnen Fäden durch einen Taststift 9 und eine Gleitkufe 17 nicht oder nur unwesentlich verschoben werden können. Durch die am Meßwagen 1 befestigte Gleitkufe 17 und die als Schienen für den Meßwagen dienenden Fadenumlenkstange 4 und 6 wird die Ebene der verkürzten, zwischen der Fadenumlenkstange 4 und der Gleitkufe 17 liegenden Meßstrecke für den Taststift 9 in eine eindeutige Nullage gebracht.

Über die Führung 8 wird der Taststift 9 so geführt, daß der Taststift 9 längs einer Linie frei beweglich geführt ist. Über eine Verbindungsstange 10 und ein Metallplättchen 11 ist der Taststift 9 an einer Blattfeder 12 aufgehängt.

Die Ausgangsposition des Taststiftes 9 kann durch die Aufhängung der Blattfeder 12 eingestellt werden (in der Fig. 4 nicht dargestellt). Der induktive tastlose Wegaufnehmer 13 in Verbindung mit dem einstellbaren Metallplättchen 14 gibt über das flexible Kabel 15 die Impulse an eine feststehende Elektronikeinheit weiter, die ebenfalls nicht dargestellt ist.

Der Meßwagen 1 fährt mit Hilfe eines Antriebsmotors quer zur Fadenschar F, wobei die Gleitkufe 17 so eingestellt ist, daß durch sie sicher alle Fäden erfaßt, unter ihrer Kufe hindurch- und anschließend wieder in die vorherige Position zurückgeführt werden. Der Taststift 9 ist in seiner Ausgangsposition so eingestellt, daß die Berührung der abgerundeten Taststiftspitze mit dem von der Gleitkufe 17 in die verkürzte Meßstreckenebene ausgelenkten Faden F im Bereich der Abrundung der Spitze erfolgt. Da beim Weiterfahren des Meßwagens 1 infolge des Rietes der Faden F in Fahrtrichtung nicht ausgelenkt werden kann, wird gleichzeitig mit dem Weiterfahren des Meßwagens 1 der Taststift 9 angehoben, was ein Entlanggleiten des Fadens F an der Spitze des Taststiftes 9 zur Folge hat. Ist der Taststift 9 so weit angehoben, daß die von der Blattfeder 12 auf den Taststift 9 wirkende Kraft der Kraft entspricht, die der Faden F dem Taststift 9 infolge der diesem Faden eigenen Fadenzugkraft entgegensetzt, so gleitet der Faden an der Spitze des Taststiftes vorbei und der Taststift senkt sich wieder ab. Der Faden F wird anschließend durch die Gleitkufe 17 in die alte Meßebene wieder zurückgeführt. Eine Anzeigenadel 16 zeigt an, welcher Faden gerade gemessen wird.

Fig. 5 zeigt einen Schnitt durch die Gleitkufe 17 der Vorrichtung nach Fig. 4. Hierbei wurde aus Fig. 4 nur das Wesentliche übernommen, um das Prinzip der Auslenkung sowohl der Gleitkufe 17 als auch des Taststiftes 9 zu verdeutlichen. Die Gleitkufe 17 lenkt die Fäden F in die Nullage aus, auf der der Taststift 9 eingestellt ist. Nachdem die einzelnen Fäden unter dem Taststift hindurchgeglitten sind und dabei entsprechend ihrer Fadenzugkraft den Taststift 9 angehoben haben, werden die Fäden F wieder durch die Gleitkufe 17 in ihre Ausgangsposition zurückgeführt.

## Patentansprüche

1. Verfahren zum Erkennen von Fadenzugkraftunterschieden in einer geordneten Fadenschar an Textilmaschinen, insbesondere Zettel- oder Schärmaschinen, wobei die Einzelfäden der Fadenschar im Meßbereich gleichen Abstand voneinander aufweisen, dadurch gekennzeichnet, daß die Fadenschar insgesamt unter für alle Einzelfäden gleichen Bedingungen, beispielsweise mittels für die Fäden der Fadenschar gemeinsamen Fadenumlenkstangen, aus ihrer allgemeinen Ebene in eine neue Ebene von in Laufrichtung durch die Meßstrecke begrenzter Länge ausgelenkt und nach dieser Meßstrecke wieder zurückgeführt wird, und daß die einzelnen Fäden in festgelegter Reihenfolge mit vorbestimmtem Kraftverlauf im Bereich der Meßstrecke aus der Ebene ausgelenkt werden, wobei das Ausmaß der Auslenkung gemessen und/oder registriert und/oder als Stellgröße für Regel- und/oder Steuervorgänge benutzt wird.

2. Verfahren nach Anspruch 1, dadurch gekennzeichnet, daß zyklisch jeder einzelne Faden nacheinander im Bereich der Meßstrecke aus der Ebene ausgelenkt wird.

3. Verfahren nach Anspruch 1 und 2, dadurch gekennzeichnet, daß bis zu 10 Fäden pro Sekunde im Bereich der Meßstrecke aus der Ebene ausgelenkt werden.

4. Verfahren nach Anspruch 1 bis 3, dadurch gekennzeichnet, daß für die Meßstrecke eine Länge von 0,5 bis 30 cm gewählt wird.

5. Verfahren nach Anspruch 1 bis 4, dadurch gekennzeichnet, daß die Gesamtauslenkung in der Meßstrecke in einen ersten, bezogen auf die Nullage der Messung konstanten und einen zweiten, von der jeweiligen Fadenspannung abhängigen Betrag aufgeteilt wird.

6. Vorrichtung zur Durchführung des Verfahrens nach einem der Ansprüche 1 bis 5, mit mindestens zwei Fadenumlenkorganen, die gleichzeitig der Festlegung der Meßstrecke dienen, dadurch gekennzeichnet, daß die Fadenumlenkorgane als jeweils allen Fäden der Fadenschar gemeinsame Fadenumlenkstangen (4, 5) ausgebildet sind, wobei innerhalb der Meßstrecke s ein Riet (7) angeordnet ist, und daß ein quer zur Fadenschar (F) verfahrbarer Meßwagen (1) und in diesem ein längs einer im wesentlichen senkrecht oder annähernd senkrecht zur Fadenscharebene der Meßstrecke s verlaufenden Linie beweglicher, mittels einer Feder oder einer anderen Kraft belasteter Taststift (9) angeordnet ist, dessen Position durch eine an sich bekannte Meßeinrichtung erfaßbar ist, und der Meßwagen (1) über flexible Kabel (15) mit den dazugehörenden Schalt-, Registrier- und Versorgungseinrichtungen verbunden ist.

7. Vorrichtung nach Anspruch 6, dadurch gekennzeichnet, daß der Meßwagen (1) auf Schienen fährt, welche parallel zur Ebene der Meßstrecke s und senkrecht zur Laufrichtung der Fadenschar (F) angeordnet sind.

8. Vorrichtung nach Anspruch 7 zur Durchführung des Verfahrens nach Anspruch 5, mit mindestens drei Fadenumlenkstangen, dadurch gekennzeichnet, daß zwei benachbarte Fadenumlenkstangen (4, 5) gleichzeitig der Festlegung der Meßstrecke s dienen, und daß unter dem Meßwagen (1) eine mit dem Boden des Meßwagens (1) verbundene, sich parallel zu dessen Schiene(n) (4 bzw. 4 und 6) erstreckende, außer dem jeweils zu messenden Faden jeweils mehrere weitere Fäden davor und dahinter erfassende Gleitkufe (17) zwischen dem zwischen dem Riet (7) und der in Fadenlaufrichtung nächstgelegenen Fadenumlenkstange (5) laufenden Taststift und der Fadenumlenkstange (5) angeordnet ist.

9. Vorrichtung nach Anspruch 8, dadurch gekennzeichnet, daß die Gleitkufe (17) die Form einer doppelseitigen Schlittenkufe hat, wobei die beiden Enden der Gleitkufe zum Meßwagen (1) hin gebogen und der mittlere Teil auf einer Länge von mindestens dem Dreifachen des Taststiftdurchmessers parallel zur Führungsstange (4) verläuft.

10. Vorrichtung nach Anspruch 6 bis 9, dadurch gekennzeichnet, daß die den Taststift (9) belastende Kraft die Schwerkraft ist.

11. Vorrichtung nach Anspruch 6 bis 10, dadurch gekennzeichnet, daß der Taststift (9) mit Hilfe einer Blattfeder (12) belastet ist.

12. Vorrichtung nach Anspruch 6 bis 11, dadurch gekennzeichnet, daß der Meßwagen (1) zum Einlegen der Fadenschar (F) abnehmbar ist.

13. Vorrichtung nach Anspruch 6 bis 12, dadurch gekennzeichnet, daß die Schienen, auf denen der Meßwagen (1) fährt, gleichzeitig zwei von mindestens drei Fadenumlenkstangen (4, 5, 6) und auf derselben Seite der Fadenschar (F) angeordnet sind, wobei die Räder (2, 3) des Meßwagens (1) auf der der Fadenschar (F) abgewandten Seite aufliegen.

14. Vorrichtung nach Anspruch 6 bis 13, dadurch gekennzeichnet, daß der Meßwagen mit den gleichzeitig als Fadenumlenkstangen dienenden Schienen (4, 6) zum Einlegen der Fäden quer zur Fadenlaufrichtung ausschwenkbar ist.

15. Vorrichtung nach Anspruch 6 bis 14, dadurch gekennzeichnet, daß die Spitze des Taststiftes (9) als Kegelstumpf ausgebildet ist.

16. Vorrichtung nach Anspruch 6 bis 15, dadurch gekennzeichnet, daß die Spitze des Taststiftes (9) als abgeplattete Halbkugel ausgebildet ist.

17. Vorrichtung nach Anspruch 6 bis 16, dadurch gekennzeichnet, daß das Verhältnis von Taststiftdurchmesser zum Fadenabstand zweier benachbarter Fäden der Fadenschar kleiner oder gleich 4 ist.

18. Vorrichtung nach Anspruch 6 bis 17, dadurch gekennzeichnet, daß die Meßeinrichtung zum Erfassen der Position des Taststiftes (9) ein induktiver tastloser Wegaufnehmer (11, 13, 14) ist.

## Claims

1. A method of detecting differences in filament traction in a bundle of parallel filaments in textile machines, particularly warping machines or warping frames, the individual filaments of the bundle of filaments being equidistant from one another in the measuring zone, characterised in that the bundle of filaments as a whole is deflected from its general plane under conditions which are the same for all the individual filaments, for example by means of filaments guide bars common to the filaments of the bundle, into a new plane of which the length is delimited by the measuring zone in the direction of travel and is returned after passing that measuring zone, and in that the individual filaments are deflected from the plane in a fixed sequence by a predetermined force in the vicinity of the measuring zone, the degree of deflection being measured and/or recorded and/or used as a correcting variable for regulating and/or control functions.

2. A method as claimed in claim 1, characterised in that each individual filament is successively deflected from the plane in the measuring zone on a cyclical basis.

3. A method as claimed in claims 1 and 2, characterised in that up to 10 filaments per second are deflected from the plane in the measuring zone.

4. A method as claimed in claims 1 to 3, characterised in that the measuring zone has a length of from 0.5 to 30 cm.

5. A method as claimed in claims 1 to 4, characterised in that the total deflection in the measuring zone is divided into a first amount which is constant in relation to the zero position of the measurement and a second amount which depends upon the particular filament tension.

6. An apparatus for carrying out the method claimed in any of claims 1 to 5 comprising at least two filament guide members which at the same time are used for defining the measuring zone, characterised in that the filament guide members are in the form of filament guide bars (4, 5) common to all the filaments of the bundle, a comb (7) being arranged in the measuring zone s, and in that a measuring carriage (1) designed to travel across the bundle (F) of filaments is provided, incorporation a feeler pin (9) loaded by spring or other force which is displaceable along a line extending substantially vertically or substantially perpendicularly of the plane of the bundle of filaments in the measuring zone s and of which the position is determinable by a detector known per se, and in that the measuring carriage (1) is connected by flexible cables (15) to the associated switching, recording and power supply systems.

7. An apparatus as claimed in claim 6, characterised in that the measuring carriage (1) travels on rails which are arranged parallel to the plane of the measuring zone s and perpendicularly of the direction of travel of the bundle (F) of filaments.

8. An apparatus as claimed in claim 7 for carrying out the method claimed in claim 5 comprising at least three filament guide bars, characterised in that two adjacent filament guide bars (4, 5) are simultaneously used for defining the measuring zone s and in that a runner (17) which is fixed to the bottom of the measuring carriage (1) and which extends parallel to its rail(s) (4 or 4 and 6), picking up not only the particular filament to be measured but also several other preceding and following filaments is arranged beneath the measuring carriage (1) between the feeler pin extending between the comb (7) and the nearest filament guide bar (5) in the direction of travel.

9. An apparatus as claimed in claim 8, characterised in that the runner (17) is in the form of a two-sided sledge runner, the two ends of the runner being bent towards the measuring carriage (1) and the middle section running parallel to the guide bar (4) over a length equal to at least three times the diameter of the feeler pin.

10. An apparatus as claimed in claims 6 to 9, characterised in that the force loading the feeler pin (9) is gravity.

11. An apparatus as claimed in claims 6 to 10, characterised in that the feeler pin (9) is loaded by a leaf spring (12).

12. An apparatus as claimed in claims 6 to 11, characterised in that the measuring carriage (1) is designed to be removed for the introduction of the bundle (F) of filaments.

13. An apparatus as claimed in claims 6 to 12, characterised in that the rails on which the measuring carriage (1) travels simultaneously form two of at least three filament guide bars (4, 5, 6) which are arranged on the same side of the bundle (F) of filaments, the wheels (2, 3) of the measuring carriage (1) lying on that side remote from the bundle (F) of filaments.

14. An apparatus as claimed in claims 6 to 13, characterised in that the measuring carriage with its rails (4, 6) simultaneously serving as filament guide bars is designed to be swung out transversely of the direction of travel of the filaments for the purpose of introduction of the filaments.

15. An apparatus as claimed in claims 6 to 14, characterised in that the tip of the feeler pin (9) is frustoconical.

16. An apparatus as claimed in claims 6 to 15, characterised in that the tip of the feeler pin (9) is in the form of a flattened hemisphere.

17. An apparatus as claimed in claims 6 to 16, characterised in that the ratio of the feeler pin diameter to the interval between two adjacent filaments of the bundle is smaller than or equal to 4.

18. An apparatus as claimed in claims 6 to 17, characterised in that the detector used for determining the position of the feeler pin (9) is an inductive contactless displacement sensor (11, 13, 14).

**Revendications**

1. Procédé pour détecter les différences de force de traction des fils dans une nappe de fils en ordre sur des machines textiles, en particulier des enrouleurs de chaîne ou machines à ourdir, les différents fils de la nappe de fils présentant le même écart les uns par rapport aux autres dans la zone de mesure, caractérisé en ce que l'on fait dévier la nappe de fils, dans on ensemble, dans des conditions qui sont les mêmes pour tous les fils individuels, par exemple au moyen de tiges de guidage ou de déviation communes aux fils de la nappe de fils, et ce à partir de son plan général pour qu'elle se trouve dans un nouveau plan d'une longueur limitée dans le sens de l'avance des fils par la section de mesure, et qu'on la ramène ensuite à sa position initiale après cette section de mesure, et en ce que l'on fait dévier les différents fils hors du plan, en un ordre déterminé, avec une évolution de force préétablie, dans la zone de la section de mesure, l'importance de la déviation étant mesurée et/ou enregistrée et/ou utilisée comme grandeur de réglage pour les processus de régulation et/ou de commande.

2. Procédé selon la revendication 1, caractérisé en ce que l'on fait dévier chaque fil individuel l'un après l'autre, de façon cyclique, hors du plan, dans la zone de la section de mesure.

3. Procédé selon l'une quelconque des revendications 1 et 2, caractérisé en ce que l'on fait dévier hors du plan, dans la zone de la section de mesure, jusqu'à 10 fils par seconde.

4. Procédé selon l'une quelconque des revendications 1 à 3, caractérisé en ce qu'une longueur de 0,5 à 30 cm est choisie pour la section de mesure.

5. Procédé selon l'une quelconque des revendications 1 à 4, caractérisé en ce que la déviation totale dans la section de mesure est subdivisée en une première valeur, qui est constante, rapportée à la position zéro de la mesure, et en une seconde valeur, qui est fonction de la tension de chaque fil au moment considéré.

6. Dispositif pour la mise en oeuvre du procédé selon l'une quelconque des revendications 1 à 5, qui comporte au moins deux organes de déviation des fils, lesquels servent en même temps à définir la section de mesure, caractérisé en ce que les organes de déviation des fils sont chacun réalisés sous la forme de tiges de déviation ou de guidage des fils (4, 5), communes à tous les fils de la nappe de fils, un peigne ou rôs (7) étant disposé à l'intérieur de la section de mesure s, et en ce qu'un chariot de mesure (1) peut se déplacer transversalement à la nappe de fils (F) et qu'un palpeur (9), qui peut être soumis à l'action d'un ressort ou d'une autre force, et qui est mobile le long d'une ligne sensiblement ou approximativement perpendiculaire au plan de la nappe de fils de la section de mesure s, est disposé dans ledit chariot de mesure (1), palpeur dont la position peut être captée par un dispositif de mesure connu en soi, le chariot de mesure (1) étant relié, par l'intermédiaire de câbles flexibles (15), aux dispositifs d'alimentation, d'entregistrement et de commutation correspondants.

7. Dispositif selon la revendication 6, caractérisé en ce que le chariot de mesure (1) se déplace ou roule sur des rails qui sont disposés parallèlement au plan de la section de mesure s et perpendiculairement au sens de l'avance de la nappe de fils (F).

8. Dispositif selon la revendication 7, destiné à la mise en oeuvre du procédé selon la revendication 5, qui comporte au moins trois tiges de déviation ou de guidage des fils, caractérisé en ce que deux tiges de déviation des fils voisines (4, 5) servent en même temps à déterminer la section de mesure s, et en ce qu'un patin de glissement (17), prévu sous le chariot de mesure (1), et relié au fond dudit chariot de mesure (1), s'étend parallèlement au ou aux rails (4 ou 4 et 6) de celui-ci, patin de glissement (17) qui saisit chaque fois, outre le fil à mesurer dans le cas considéré, plusieurs autres fils devant et derrière celui-ci, ledit patin de glissement (17) étant disposé entre le palpeur, qui se déplace entre le peigne (7) et la tige de déviation des fils (5) la plus proche dans le sens de l'avance des fils, et la tige de déviation des fils (5).

9. Dispositif selon la revendication 8, caractérisé en ce que le patin de glissement (17) a la forme d'un arbre ou d'une barre de traîneau à deux côtés, les deux extrémités du patin de glissement étant coudées ou recourbées vers le chariot de mesure (1) et la partie centrale s'étendant, sur une longueur égale au moins au triple du diamètre du palpeur, parallèlement à la tige de guidage (4).

10. Dispositif selon l'une quelconque des revendications 6 à 9, caractérisé en ce que la force à laquelle est soumis le palpeur (9) est la gravité.

11. Dispositif selon l'une quelconque des revendications 6 à 10, caractérisé en ce que le palpeur (9) est soumis à l'action d'un ressort à lame (12).

12. Dispositiv selon l'une quelconque des revendications 6 à 11, caractérisé en ce que le chariot de mesure (1) peut être démonté et retiré en vue de l'insertion de la nappe de fils (F).

13. Dispositif selon l'une quelconque des revendications 6 à 12, caractérisé en ce que les rails sur lesquels roule le chariot de mesure (1) constituent en même temps deux des tiges de déviation des fils (4, 5, 6), lesquelles sont au moins au nombre de trois, et sont situés sur le même côté de la nappe de fils (F), les roues (2, 3) du chariot de mesure (1) reposant sur le côté opposé à la nappe de fils (F).

14. Dispositif selon l'une quelconque des revendications 6 à 13, caractérisé en ce que le chariot de mesure (1) peut pivoter vers l'extérieur, transversalement au sens de l'avance des fils, pour permettre l'insertion de ceux-ci, et ce avec les rails (4,6) qui servent en même temps de tiges de déviation des fils.

15. Dispositif selon l'une quelconque des revendications 6 à 14, caractérisé en ce que la pointe du palpeur (9) est réalisée sous la forme d'un tronc de cône.

16. Dispositif selon l'une quelconque des revendications 6 à 15, caractérisé en ce que la pointe du palpeur (9) est réalisée sous la forme d'un hémisphère aplati.

17. Dispositif selon l'une quelconque des revendications 6 à 16, caractérisé en ce que le rapport entre le diamètre du palpeur et l'écart entre deux fils voisins sur la nappe de fils est inférieur ou égal à 4.

18. Dispositif selon l'une quelconque des revendications 6 à 17, caractérisé en ce que le dispositif de mesure destiné à capter la position du palpeur (9) est un capteur de déplacement inductif sans contact (11, 13, 14).

Fig. 1

Fig. 2

Fig. 3

Fig. 4

Fig. 5